# EUROPEAN PATENT APPLICATION

(11) **EP 4 155 373 A1**
(43) Date of publication of application: **29.03.2023**
(21) Application number: 20936957.8
(22) Date of filing: 20.05.2020
(51) Int. Cl.: C11D 3/48, A01N 59/00

(54) **DISINFECTANT AND PROTECTIVE COMPOSITION FOR TEXTILES OR SIMILAR**

(71) Applicant: Ancor Tecnológica Canaria, S.L., 35017 Las Palmas de Gran Canaria (Las Palmas) (ES)
(72) Inventor: BELTRÁN AZNAR, Noelia, 35017 Las Palmas de Gran Canaria (ES)
(74) Representative: De la Fuente Fernandez, Dionisio
(86) International application number: PCT/ES2020/070324
(87) International publication number: WO 2021/234184

(57) **Abstract**

The present invention relates to a textile disinfectant and protective composition, wherein said composition is suitable for any washing process and which may be used for washing at low temperature, providing protection to the treated garments between 7 and 30 days, the composition comprising: clay particles, preferably bentonite in a proportion between 2% and 5%; aliphatic bromides in a proportion between 0.5% and 2.5%; soluble silver salts in a proportion between 0.05% and 0.8%; dispersants consisting of ammonium salts of high molecular weight fatty acids in a proportion between 0.8% and 2.5%; silicone-free deaerating polymers in a proportion between 0.6% and 2.5%; at least one urea rheological agent or similar in a proportion between 0.5% and 1.5%; and water as a dispersing vehicle up to 100% of the composition.

## Description

### OBJECT OF THE INVENTION

The present invention relates to a disinfectant and protective composition for textiles or similar that provides protection to treated garments for at least 7 to 30 days, being effective on a wide range of both natural and synthetic fabrics, the composition is based on the incorporation of Ag⁺ ions in modified clays by means of aliphatic bromides, where specific incorporated additives provide stability, dispersion and fluidity of the composition.

### BACKGROUND OF THE INVENTION

At a domestic and industrial level, disinfectant chemical compositions are often used in manual and automatic textile washing processes to destroy bacteria during washing operations in order to meet minimum hygiene standards. In many facilities, hygiene standards are met by using washing water at a very high temperature, 82°-91°C (180°-195°F). When these temperatures are not attainable, a disinfectant chemical agent is often added to one or more aqueous materials that come into contact with bacteria to produce a bactericidal effect under low temperature conditions of approximately 48°-60°C (120°-140°F). After the disinfection and cleaning processes, however, just a short time after washing, even inside the washing machine, the clothes are once again exposed to possible contamination.

The need for disinfection has led to the consideration of various agents. One of the most common disinfectants for washing utensils is aqueous sodium hypochlorite (NaOCI). However, although sodium hypochlorite is effective, low-cost and generally available, it has several disadvantages. First, hypochlorite can react with hardness ions in service water including calcium, magnesium, iron and manganese. This chemical interaction can cause filings and mineral deposits on parts of the machine. Said deposits may tend to form inside and on the water passages of a dishwashing machine in such a way that it can substantially change the flow rates of various aqueous materials through the machine. Any such change can significantly reduce the effectiveness of the machine's operation. Chlorine, as a constituent of sodium hypochlorite, may also present compatibility issues when used with other chemical compounds that have desirable rolling and rinsing aid features, such as non-ionic surfactants. Furthermore, the interaction between sodium hypochlorite and various minerals in the service water may lead to the formation of stains and films on utensils.

The use of sodium hypochlorite tends to substantially increase the total dissolved solids present in aqueous disinfectant compositions. The high concentrations of solids may tend to increase the tendency of the agents to leave undesirable stains and streaks after drying. In fact, although chlorine has a notable disinfectant effect, the increased solids resulting from this constituent may create films and stains and otherwise leave a residue on rinsed utensils. Chlorine may also react and degrade or corrode tableware including metals, as well as metals found in the environment of use.

Moreover, sodium hypochlorite is a strong oxidising agent and may substantially corrode a variety of materials used in the manufacture of machines and in tableware and cookware commonly used in today's institutional settings. Lastly, sodium hypochlorite spills are unpleasant, may cause damage to bleachable surfaces and are difficult to clean.

In the state of the art, a number of washing and rinsing aid compositions are known, based mostly on disinfectant-free non-ionic surfactants, as shown in United States patent US3592774 which discloses saccharide-based non-ionic rinsing agents.

French patent publication FR 2321301 describes an antimicrobial composition including peracetic or perpropionic acid, hydrogen peroxide and water as a disinfectant to prevent the growth of germs on equipment in the health and food industries.

International patent publication WO 91/15122 describes a two-part germicidal and anticorrosive system where the first part contains acetic acid, hydrogen peroxide and peracetic acid and the second part contains a specific wetting agent, namely, a sodium hydroxide reaction product, an aliphatic alcohol and phosphorus pentoxide or a potassium salt of perfluoroalkyl sulfonate. This system can be premixed and is used to clean and prevent corrosion of dental and medical equipment.

United States patent US4880638 discloses a biocidal composition comprising water, a source of chlorite ions, a source of chloride ions and a source of chlorate ions where the molar ratio of chlorite ions to chlorate ions is in the range from about 2: 1 to about 1000: 1, the molar ratio of chlorite ions to chloride ions is from about 0.1: 1 to about 1000: 1 and the molar ratio of chloride ions to chlorate ions is in the range from about 0.1: 1 to about 1000.1; the source of chlorite ions is present in amounts from about 40 grams to about 0.04 milligrams per thousand grams of water; and the composition including a pH-adjusting material in an amount sufficient to adjust the pH of the mixture to above 7.0. Thus the composition preventing the formation of significant amounts of stabilised chloride dioxide or chlorine dioxide.

Patent application EP0241390 discloses a process for decontaminating textiles contaminated by bacteria which comprises washing said textiles with a detergent composition free of any peroxide bleaching agent, and then treating said textiles with a peroxide bleaching agent in an aqueous bath at a pH between about 9°C and 13°C, at a temperature of between about 40°C and 70°C, in the presence of calcium, for enough time to decontaminate said textiles; said calcium is dissolved and present in an amount between about 0.001% and 1% by weight based on the weight of the bath with the calcium source selected from calcium oxide, calcium hydroxide or a calcium salt whose anion is inert with respect to the peroxide bleaching agent and whose dissociation constant is greater than about 0.01.

United States patent US9253986 discloses a laundry product for simultaneously cleaning and disinfecting a batch of soiled laundry by addition of the laundry product to a conventional washing machine, wherein the laundry product is a cleaning and disinfecting agent when in the presence of a body of water with the washing product, consisting of: a) a water-active laundry detergent in solid, liquid or gel form for releasing soil from the batch of soiled laundry when the water-active laundry detergent is present in the body of water with the batch of soiled laundry water; and b) a disinfectant composition consisting of: i) a non-disinfectant hydantoin; and ii) silver chloride for normally releasing and maintaining a first level of silver ions in the body of water, wherein the non-disinfectant hydantoin and silver chloride are mixed together for simultaneously dispensing into the washing machine, and wherein the non-disinfectant hydantoin increases the level of silver ions available in the body of water to a level that is greater than the level of silver ions normally available if silver chloride is used without hydantoin, such that the disinfecting capacity of the washing product is enhanced as the soiled laundry is being agitated in a washing machine.

The present invention relates to a textile disinfectant and protective composition, wherein said composition is suitable for any washing process and which may be used for washing at low temperature, which satisfactorily solves the problems of the state of the art, since in addition to avoiding high temperatures for effective disinfection with the resulting economic cost, it provides better clothing care. The composition is stable at high temperatures and resistant to the ironing step of laundries.

Furthermore, the use of said composition may replace other biocidal substances, notably increasing the efficiency of the disinfection system and providing at least 7 to 30 days of protection to the treated garments, being effective on a wide range of both natural and synthetic fabrics, such as cotton or fabrics made from polymeric materials.

### PREFERRED EMBODIMENT OF THE INVENTION

The present invention relates to a disinfectant and protective composition that keeps clothing free of bacteria pathogens, fungi, viruses and other agents, by applying the correct doses of said composition in the washing process, the garments remaining protected against microbiological contamination for a minimum of 7 to 30 days. The composition of the present invention is based on the microencapsulation of an active ingredient obtained from silver compounds. This microencapsulation technology provides a high affinity of the components with the fibres and allows a progressive release of the active ingredient; therefore, the fibres are protected against contamination by microorganisms for a long period of time. The composition of the invention enables eliminating those microorganisms that can cause infections, the presence of mites or similar problems. It prevents the growth of algae, fungi, viruses, moulds and other potential pathogens, in addition to preventing side effects due to the presence of microorganisms such as bad odours, discolouration or damage to the fabric.

The composition of the present invention is initially formed by the selection and dispersion of clay particles, preferably bentonite in a proportion between 2% and 5% in water as a dispersion vehicle. An organic modification and washing of the clay in dispersion is carried out, adding modifying stabilisers of aliphatic bromides in a proportion between 0.5% and 2.5%, which stabilises the clay particles in the aqueous medium; ammonium bromides are preferably used, where at least one of the radicals is a linear or branched aliphatic hydrocarbon chain, having between 1 and 30 carbon atoms and, especially, where at least one of the radicals is a linear or branched aliphatic hydrocarbon, having 15 or 16 carbon atoms. The clays have surface modification by the addition of aliphatic bromides, which facilitates the exfoliation and dispersion of the silver ions used as an active ingredient.

Next, soluble silver salts are incorporated in a proportion between 0.05% and 0.8% which allows the Ag⁺ ions to be encapsulated with the modified clay particles, the silver salts used are preferably selected from silver nitrate, organic silver salts, including citrates, acetates, adipates, simple and compound salts, silver halides or silver complexes.

For a greater antibacterial effect, assays were carried out with proportions of silver salts of 0.5%, showing maximum efficiency.

Dispersants, preferably ammonium salts of high molecular weight fatty acids in a proportion between 0.8% and 2.5%, are added to the resulting mixture. These dispersants are used to ensure that the modified clay-silver combination allows greater distribution and dispersion in the solvent, said dispersants being responsible for dispersing insoluble compounds in water.

Next, silicone-free deaerating polymers are added in a proportion between 0.6% and 2.5% preferably, long-chain mineral, synthetic or natural oils starting from molecular weights greater than 1,000 gr/mol; this prevents foaming from stabilising in the medium, since they preferentially concentrate at the liquid-air interface and form a deaerating film around the micro-foam bubble, therefore preventing the surfactants from stabilising the bubble. Furthermore, said partially insoluble deaerating agents promote the diffusion of the air in the bubble into the medium surrounding it. To modify the viscosity of the resulting composition, at least one urea rheological agent or similar is added to the composition, preferably with molecular weights greater than 500 gr/mol in a proportion between 0.5% and 1.5%, allowing the resulting product to have greater fluidity, such that sedimentation of the product during its transport and storage is prevented, but also allowing it to flow when it has to be poured or pumped during application. The composition is completed with water up to 100% of the composition.

The resulting composition was analysed based on bactericidal activity comparing a range of product concentrations in order to assess the product's efficacy against bacteria. This range of concentrations is based on the guidelines of standard UNE-EN 1276:2010, for antiseptics and chemical disinfectants. The assay demonstrated its antibacterial activity for a period of at least 30 days. It eliminates those microorganisms that may cause infections, the presence of mites or similar problems. It prevents the growth of algae, fungi, viruses, moulds and other potential pathogens. It prevents side effects due to the presence of microorganisms such as bad odours, discolouration or damage to the fabric.

The composition shows greater effectiveness, since it shows a progressive release of the active substance, providing a minimum of 7 to 30 days of protection to the treated garments, being effective on a wide range of both natural and synthetic fabrics, such as cotton or fabrics made from polymeric materials.

The composition demonstrates high performance, where the use of the composition may replace other biocidal substances, increasing the efficiency of the disinfection system. Furthermore, it is suitable for any washing process at low temperatures, reducing energy costs and providing better clothing care.

## Claims

1. A disinfectant and protective composition for textiles or similar that provides protection to treated garments for at least 7 to 30 days, being effective on a wide range of both natural and synthetic fabrics, such as cotton or fabrics made from polymeric materials, **characterised in that** the composition comprises clay particles, preferably bentonite in a proportion between 2% and 5%; modifying stabilisers of aliphatic bromides in a proportion between 0.5% and 2.5%; soluble silver salts in a proportion between 0.05% and 0.8%; dispersants consisting of ammonium salts of high molecular weight fatty acids in a proportion between 0.8% and 2.5%; silicone-free deaerating polymers in a proportion between 0.6% and 2.5%; at least one urea rheological agent or similar in a proportion between 0.5% and 1.5%; and water as a dispersing vehicle up to 100% of the composition.

2. The disinfectant and protective composition for textiles or similar, according to claim 1, **characterised in that** the silver salts are preferably found in a proportion of 0.5% of the resulting mixture.

3. The disinfectant and protective composition for textiles or similar, according to claim 1, **characterised in that** the aliphatic bromides used are selected from among those where at least one of the radicals is a linear or branched aliphatic hydrocarbon chain, having between 1 and 30 carbon atoms and, especially, where at least one of the radicals is a linear or branched aliphatic hydrocarbon, having 15 or 16 carbon atoms.

4. The disinfectant and protective composition for textiles or similar, according to claim 1, **characterised in that** the silver salts used are preferably selected from silver nitrate, organic silver salts, including citrates, acetates, adipates, simple and compound salts, silver halides or silver complexes.

5. The disinfectant and protective composition for textiles or similar, according to claim 1, **characterised in that** the deaerating polymers are preferably selected from long-chain mineral, synthetic or natural oils starting from molecular weights greater than 1,000 gr/mol.

6. The disinfectant and protective composition for textiles or similar, according to claim 1, **characterised in that** the urea rheological agent used has molecular weights greater than 500 g/mol.
